Europäisches Patentamt

European Patent Office

Office européen des brevets

(11) Publication number: **0 065 993 B1**

## (12) EUROPEAN PATENT SPECIFICATION

(45) Date of publication of patent specification: **21.11.91**

(51) Int. Cl.⁵: **B23Q 35/28**, B23Q 5/34, F16H 25/00

(21) Application number: **82900035.5**

(22) Date of filing: **09.12.81**

(86) International application number:
**PCT/JP81/00375**

(87) International publication number:
**WO 82/02016 (24.06.82 82/16)**

(54) COPY CAM DRIVING DEVICE FOR MACHINE TOOL.

(30) Priority: **11.12.80 JP 175535/80**
**16.01.81 JP 5278/81**

(43) Date of publication of application:
**08.12.82 Bulletin 82/49**

(45) Publication of the grant of the patent:
**21.11.91 Bulletin 91/47**

(84) Designated Contracting States:
**DE FR GB**

(56) References cited:
| | |
|---|---|
| DE-A- 2 008 281 | GB-A- 15 975 |
| GB-A- 1 099 639 | GB-A- 1 438 388 |
| JP-A- 5 313 275 | JP-A- 5 334 200 |
| JP-A-50 145 986 | US-A- 3 753 384 |

PATENTS ABSTRACTS OF JAPAN, vol. 4, no.
96 (M-20)[578], 11th July 1980; & JP - A - 55
54 159 (CITIZEN TOKEI K.K.) 21-04-1980

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **ICHIYANAGI, Takashi**
**11-26, Higashikouri 3-chome Hirakata-shi**
**Osaka-fu 573(JP)**
Inventor: **IMANISHI, Kiyokazu**
**3-1, Higashitoyoura-cho Higashi Osaka-shi**
**Osaka-fu 579(JP)**

(74) Representative: **Crawford, Andrew Birkby et al**
**A.A. THORNTON & CO. Northumberland**
**House 303-306 High Holborn**
**London WC1V 7LE(GB)**

## Description

The present invention relates to a device for imparting a predetermined motion to an object by using a cam, and provides a cam driven device adapted to reduce variations in the force of contact between the cam and cam follower which are caused by the motion of a driven section, so as to achieve high-speed high-precision motion.

BACKGROUND ART

Referring to conventional cam driven devices, particularly a cam device for machining VTR cylinders which demand precision will now be described.

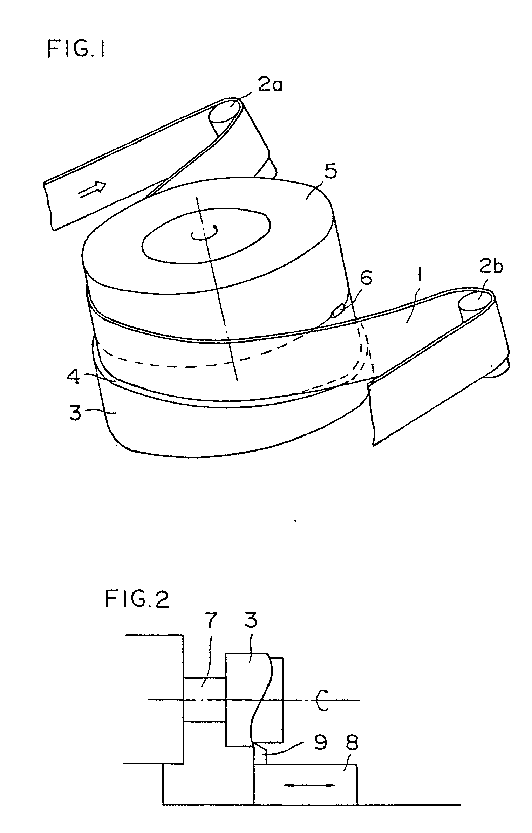

Fig. 1 shows a typical VTR cylinder section, wherein a tape 1 is entrained around the outer peripheral surfaces of an upper rotary cylinder 5 and lower fixed cylinder 3 in such a manner that the edge of the tape extends along a tape Guide 4 (hereinafter referred to as lead) provided on the outer peripheral surface of the fixed cylinder 3, said tape traveling at a fixed speed. A magnetic head 6 is attached to the upper rotary cylinder 5 to move diagonally of the tape 1 and serves to record and reproduce magnetic signals.

If, therefore, the tape guide constituted of the outer peripheral surfaces of the upper and lower cylinders 5 and 3 and the lead 4 provided on the lower cylinder 3 is not correctly produced and assembled, this would result in unstable contact between the tape 1 and the magnetic head 6, causing unevenness in reproduced images in the VTR.

For example, lack of true circularity in the cylinders varies the state of contact between the magnetic head and the tape, while lack of linearity in the lead wrinkles the tape, each causing trouble to reproduced images.

The lead on the lower cylinder is generally produced on a lathe, as shown in Fig. 2. More particularly, a cutting tool 9 fixed to the tool rest 8 is reciprocated in the direction of arrows in synchronism with the rotation of the lathe main spindle 7 to produce a predetermined shape. Thus, changes in the position of the tool rest 8 in reciprocating motion must agree with the shape of the lead.

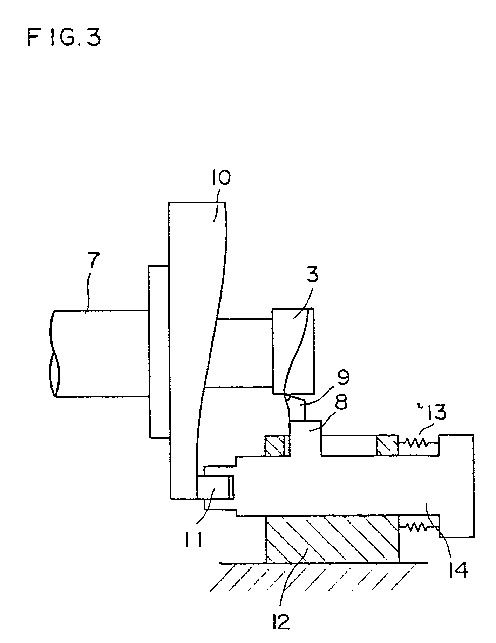

Conventionally, the method most widely practiced for giving the tool rest 8 a motion agreeing with a predetermined lead shape has, as shown in Fig. 3, been to attach to the main spindle 7 of the lathe an end cam 10 having a curve similar to the lead shape and drive the tool rest 8 as a function of the cam curve. The numeral 12 denotes a guide for the reciprocating linear motion of the tool rest 8, and 13 denotes a spring interposed between the guide 12 and a reciprocating rod 14 for urging a cam follower 11 against the end cam.

In addition, though not shown in Fig. 3, the reciprocating rod 14 is internally provided with a mechanism for feeding the cutting tool during lead machining. Phenomena which take place during the machining of the lead by using the cam device described above are as follows.

1) With changes in the position of the reciprocating rod, the amount of deflection of the spring changes and so does the force of contact between the cam surface and the cam follower.

2) The inertia effect of the reciprocating rod due to its reciprocating motion varies the force of contact between the cam surface and the cam follower, and in the case of high-speed motion, the cam follower jumps off the cam surface.

3) Vibration of the entire machining system takes place with the reciprocating motion of the reciprocating rod.

These phenomena produce serious influences on the machining of the lead which requires a high accuracy of the order of microns. More particularly, variations in the force of contact between the cam surface and the cam follower, i.e., the force on the cam, not to speak of the phenomenon of the cam follower jumping off the cam surface, aggravate the accuracy of rotation of the main spindle, producing a decisive influence on the true circularity of the cylinder. Further, vibration of the machining system must be avoided as much as possible.

With the conventional cam driven device, which has the drawbacks described above, it has been very difficult to achieve high speed machining while maintaining high accuracy.

Japanese patent Application JP-A-55/54159 discloses a zero-control system for a machine tool utilizing a cam and cam follower. A driven section is connected to the cam follower and supported by a support block. A detector is provided for detecting the force of contact between the cam and the cam follower and a circuit compares the force of contact detected by the detector with a preset value. An hydraulic load compensator is responsive to a signal from said circuit so that the force of contact is maintained at said present value. In other words it is an alternative construction to that shown in Figures 1 to 3 in that it avoids the need for a biasing spring and hence does not suffer from phenomenon 1) described above.

2

The present invention provides a cam driven device comprising a rotatably supported profile having a predetermined profile, a cam follower for contact with said cam along said predetermined profile, a driven section attached to said cam follower, a support block for supporting said driven section, a spring installed between said driven section and said support block to urge said cam follower against said cam, and a load compensator for loading said driven section with a cyclically variable compensating force corresponding to the following equation:

$$P(t) = m\overset{''}{x}(t) + kx(t) - f$$

where

P(t):     force applied to the driven section by the load compensator,

m:     mass of the driven section

$\overset{''}{x}$(t):     acceleration of the cam follower produced by the cam profile at any given instant t as the cam follower follows the cam k: spring constant

x(t):     position of the cam follower at any given instant t

and

the cam follower is to contact the cam as a result of the load compensator,

whereby the cyclically variable compensating force P(t) corresponding to the respective cam profile has been determined in advance so that in operation the load compensator, comprising means for reproducing the predetermined compensating force P(t) as a waveform and for supplying the waveform to an actuating device, generates the requisite compensating force in synchronism with rotation of the cam.

The load compensation actuator may be disposed at any desired position in the driven section, said actuator being adapted to apply a force or torque to said driven section in such a manner as to counterbalance variations in the force of contact between the cam and the cam follower caused by variations in the inertia force of the driven section due to its movement or in the load on the point of action, thereby maintaining said force of contact at a constant value to enable the achievement of stabilized high-precision motion even during high speed operation. Particularly, the invention makes it possible to machine work with high precision as in the case of machining a lead on the VTR lower cylinder by using an end cam.

In order that the present invention be more readily understood an embodiment thereof will now be described by way of example, with reference to the accompanying drawings, in which:

Fig. 1 is a perspective view of a VTR cylinder tape guide section;

Fig. 2 is a sectional view of a device for machining a VTR lower cylinder;

Fig. 3 is a sectional view of a conventional lead machining cam device;

Fig. 4 is a sectional view of a lead machining cam device according to an embodiment of the present invention;

Fig. 5 is a diagram illustrating an analysis of the motion of a cam device;

Fig. 6 is a diagram illustrating a force on a cam exerted by a cam follower in a conventional cam device; and

Fig. 7 is a sectional view of another embodiment of the invention;

BEST MODE FOR CARRYING OUT THE INVENTION

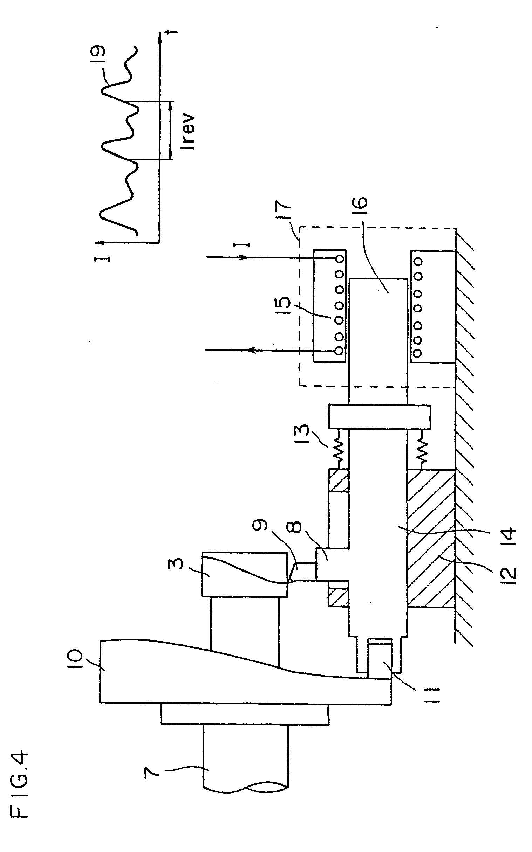

An embodiment of the invention will now be described with reference to Figs. 4-7.

Fig. 4 shows an embodiment of a lead machining cam device according to the invention.

Disposed at the rear end of the reciprocating rod is a load compensator 17 comprising a plunger type electromagnet. The numeral 15 denotes a solenoid electromagnet, and 16 denotes a plunger connected directly to the rear end of the reciprocating rod 14. A current I to be fed to the solenoid electromagnet 15 has a preset waveform (shown at 18) with one period being taken to be the time required for the main spindle to make one complete revolution. The current waveform 18 is determined on the following principle.

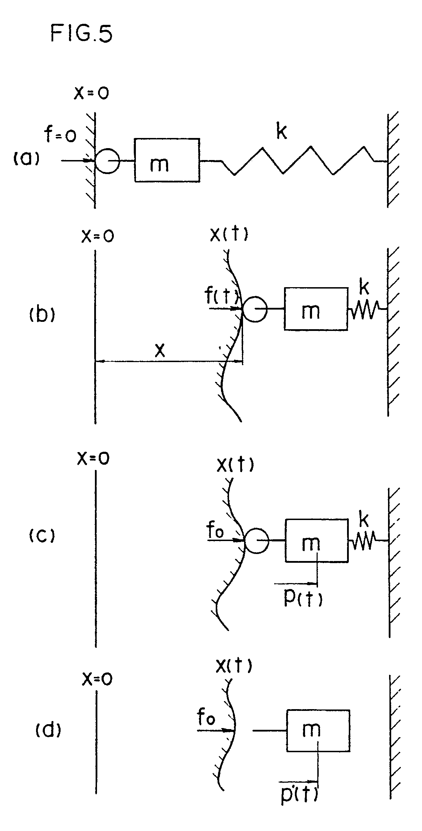

Fig. 5 (a) and (b) illustrates the principle of a conventional lead machining cam device. Mass m is the mass of the driven section, i.e., the sum of the masses of the reciprocating rod, tool rest, cutting tool, cam follower and other objects which reciprocate. Fig. 5 (a) shows a spring in its natural state with no force applied thereto, or shows its free length, the position of the cam follower at this instant being x = 0. Fig. 5 (b) shows a state during lead machining, the equation of motion in this case being given by equation (1). But the cutting force on the cutting tool (the load on the point of action) is neglected.

$$m\ddot{x} + kx = f(t) \quad \dots\dots\dots\dots\dots\dots\dots\dots \quad (1)$$

where f(t) is the force of contact between the cam follower and the cam surface, which can be found by x(t), i.e., the positional curve determined by the lead shape. To allow the cam follower to correctly follow the cam surface, f(t) must always be positive. As an example, suppose that the lead shape is a sine curve. Then, x(t) is expressed by equation (2)

$$x(t) = a \sin\left(\frac{2\pi N}{60}t\right) + x_0 \quad \dots\dots\dots\dots\dots \quad (2)$$

(where a is the amplitude of the sine curve; N is the rpm of the main spindle; and $x_0$ is the initial deflection of the spring.) From equations (1) and (2), f(t) is written as follows.

$$f(t) = -a \left| m\left(\frac{2\pi N}{60}\right)^2 - k \right| \sin\left(\frac{2\pi N}{60}t\right) + kx_0 \quad \dots \quad (3)$$

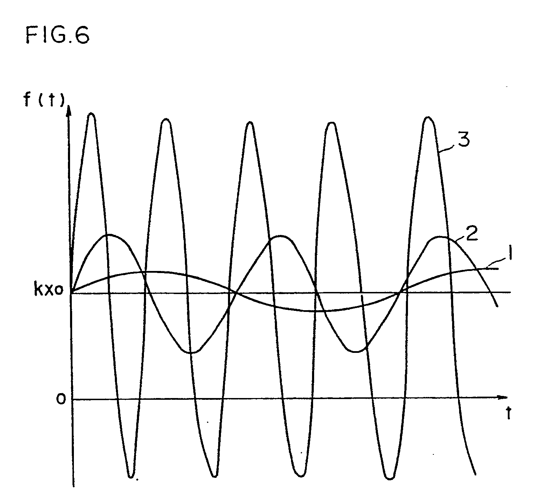

What is meant by this equation is illustrated in Fig. 6. The curves 1, 2 and 3 indicate values of f(t) at low, medium and high speed rotations, respectively. As the rotative speed is increased, the amplitude of f(t) increases under the influence of inertia force, until f(t)<0. That is, as the rpm is increased, the range of variations in the force on the cam widens and eventually the cam follower fails to follow the cam, jumping off the latter. In the actual lead curve, the conditions are more involved, as, e.g., the lead shape is straight where it is contacted by the tape; but the basic tendency is the same.

Now, the principle of the invention is as illustrated in Fig. 5 (c). Let P(t) be the force on the reciprocating rod exerted by the plunger type electromagnet. Then, the equation of motion for the system is expressed by the following equation.

$$m\ddot{x} + kx = p(t) + f_0 \quad \dots\dots\dots\dots\dots\dots\dots \quad (4)$$

where $f_0$ is the optimum force of contact between the cam follower and the cam surface. P(t) is set so that $f_0$ is constant.

Thus, the force p(t) to be applied to the reciprocating rod by the plunger type electromagnet is as follows.

$$p(t) = m\ddot{x} + kx - f_0 \quad \dots\dots\dots\dots\dots\dots\dots \quad (5)$$

Further, the current I to be applied to the plunder type electromagnet may be calculated from the current-force characteristics of the plunger type electromagnet.

If the motion of the cam device or variations in the load on the point of action are too complicated to theoretically derive P(t), f(t) may be experimentally determined to find P(t).

In brief, the purpose is to provide a device having cam mechanism, wherein a load compensation actuator is disposed at any desired position in a driven section, said actuator being adapted to apply to said driven section a force or torque preset in such a manner as to counterbalance variations in the force of contact between the cam and the cam follower caused by variations in the inertia force of the driven section due to its movement or in the load on the point of action, thereby maintaining said force of contact between the cam and cam follower at a constant value to provide a stabilized operation.

Further, these elements for producing the pressing force may be replaced by the actuator of the load compensator, and the output p'(t) from the actuator is as follows.

$$p'(t) = m\ddot{x} - f_0 \quad \dots\dots\dots\dots\dots\dots\dots\dots \quad (6)$$

4

A comparison with equation (5) shows that this has the advantage of eliminating the need to take into consideration the variations in the force due to the deflection of the spring and simplifying the arrangement.

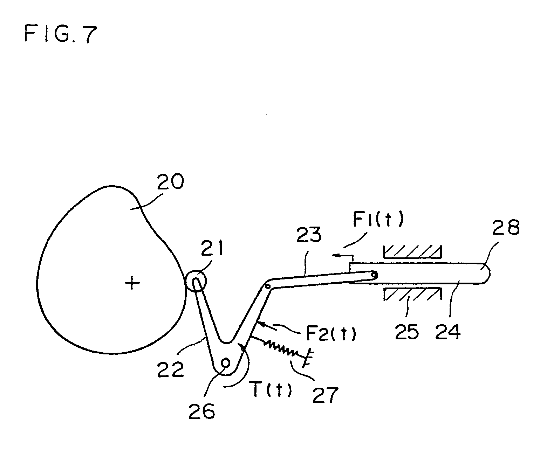

While the lead machining cam device refers to a cam mechanism for simple reciprocating motion, a more general example is shown in Fig. 7.

In Fig. 7, the numeral 20 denotes a cam; 21 denotes a cam follower, 22 denotes a lever; 23 denotes a rod; and 24 denotes a reciprocating rod guided by a linear guide 25. In this case, the load compensation actuator may be adapted to impart a force to the driven section as shown at $F_1(t)$ or $F_2(t)$ or a torque around the pivot 26 of the lever 22 as shown at $T(t)$. The numeral 21 denotes a spring and 28 denotes a point of action. Thus, the force actuator may take the form, e.g., of the electromagnet described above, or where a stronger force is needed, it may take the form of a pneumatic or hydraulic cylinder, using a control valve to control the pressure of the working fluid so as to provide a predetermined force. Further, the torque actuator may take the form, e.g., of a torque motor, in which case the voltage to be applied to said torque motor is controlled to impart a predetermined torque to the driven section.

The use of the lead machining cam device according to the present invention described so far is effective in eliminating or minimizing variations in the force of contact between the cam and cam follower caused by the movement of the reciprocating rod, thus enabling the achievement of stablized high-speed operation of the cam device, drastic reduction of machining time and improved accuracy.

INDUSTRIAL APPLICABILITY

With the cam driving device according to the invention having a load compensator installed in the driven section to maintain the force of contact between the cam and the cam follower at a constant value, high-speed high-precision motion can be achieved. If the invention is applied to a device for machining high-precision parts, such as VTR cylinder, shown herein as an embodiment of the invention, considerable reduction of machining time and improved machining accuracy can be achieved. The invention is beneficial since it can widely be applied to cam driving devices for general machines.

**Claims**

1. A cam driven device comprising a rotatably supported cam (10) having a predetermined profile, a cam follower (11) for contact with said cam along said predetermined profile, a driven section (8, 14) attached to said cam follower, a support block (12) for supporting said driven section (8, 14), a spring (13) installed between said driven section (8, 14) and said support block (12) to urge said cam follower (11) against said cam (10), and a load compensator (17) for loading said driven section (8, 14) with a cyclically variable compensating force corresponding to the following equation:

$$P(t) = m\ddot{x}(t) + kx(t) - f$$

where

P(t): force applied to the driven section by the load compensator,

m: mass of the driven section

$\ddot{x}(t)$: acceleration of the cam follower produced by the cam profile at any given instant t as the cam follower follows the cam

k: spring constant

x(t): position of the cam follower at any given instant t and

f: represents a constant force with which the cam follower is to contact the cam as a result of the load compensator (17),

whereby the cyclically variable compensating force P(t) corresponding to the respective cam profile has been determined in advance so that in operation the load compensator, comprising means for reproducing the predetermined compensating force P(t) as a waveform and for supplying the waveform to an actuating device, generates the requisite compensating force in synchronism with rotation of the cam (10).

2. A cam driving device according to claim 1, wherein the actuating device of said load compensator (17) comprises a plunger (16) connected to said driven section (14), and a solenoid electromagnet (15) disposed around said plunger and adapted to reciprocate the plunger by magnetic force.

EP 0 065 993 B1

3.  A lathe incorporating a cam driving device according to claim 1 or 2, the cam being fixed to the main spindle of the lathe, wherein a motion associated with a shape of said cam is transmitted through the cam follower to a cutting tool fixed to the driven section.

**Revendications**

1.  Dispositif d'entraînement à came comprenant une came (10) supportée en rotation et ayant un profil prédéterminé, un toucheau (11) de came destiné à être au contact de la came suivant un profil prédéterminé, une section menée (8, 14) fixée au toucheau de came, un bloc de support (12) destiné à supporter la section menée (8, 14), un ressort (13) placé entre la section menée (8, 14) et le bloc de support (12) est destiné à repousser le toucheau (11) de came contre la came (10), et un compensateur (17) de force destiné à repousser la section menée (8, 14) avec une force de compensation qui varie cycliquement et qui correspond à l'équation suivante :

$$P(t) = m\ddot{x}(t) + kx(t) - f$$

P(t) étant la force appliquée à la section menée par le compensateur de force,

m étant la masse de la section menée,

$\ddot{x}(t)$ étant l'accélération du toucheau de came produite par le profil de la came à un instant donné t lorsque le toucheau de came suit la came,

k étant la raideur du ressort

x(t) étant la position du toucheau de came à un instant donné t

f représentant une force constante avec laquelle le toucheau de came doit être au contact de la came sous l'action du compensateur de force (17),

la force P(t) de compensation qui varie cycliquement et correspondant au profil respectif de came ayant été déterminée préalablement de manière que, pendant le fonctionnement, le compensateur de force, qui comporte un dispositif destiné à reproduire la force prédéterminée de compensation P(t) sous la forme d'une forme d'onde et à transmettre la forme d'onde à un dispositif de manoeuvre, crée la force nécessaire de compensation en synchronisme avec la rotation de la came (10).

2.  Dispositif d'entraînement à came selon la revendication 1, dans lequel le dispositif de manoeuvre du compensateur de force (17) comporte un plongeur (16) raccordé à la section menée (14), et un électro-aimant (15) placé autour du plongeur et destiné à déplacer le plongeur en translation par application d'une force magnétique.

3.  Tour comprenant un dispositif d'entraînement à came selon la revendication 1 ou 2, la came étant fixée à la broche principale du tour, dans lequel un mouvement associé à la configuration d'une came est transmis par le toucheau de came à un outil de coupe fixé à la section menée.

**Patentansprüche**

1.  Über eine Führung angetriebenes Gerät mit einer drehbar gehalterten Führung (10), die ein vorgegebenes Profil besitzt, mit einem Führungsglied (11) für eine Berührung mit der Führung längs des vorgegebenen Profiles, mit einem an dem Führungsglied festgemachten, angetriebenen Teil (8, 14), mit einem Tragblock (12) zur Abstützung des angetriebenen Teiles (8, 14), mit einer zwischen dem angetriebenen Teil (8, 14) und dem Tragblock (12) eingebauten Feder (13), um das Führungsglied (11) gegen die Führung (10) zu zwingen,und mit einem Lastkompensator (17) zur Beaufschlagung des angetriebenen Teiles (8, 14) mit einer zyklisch veränderbaren Kompensationskraft, die der folgenden Gleichung entspricht:

$$P(t) = m\ddot{x}(t) + k\dot{x}(t) - f \quad ,$$

in der

P(t)        die Kraft bedeutet, die von dem Lastkompensator dem angetriebenen Teil auferlegt wird,

m        die Masse des angetriebenen Teiles ist,

6

$\overset{''}{x}(t)$ die Beschleunigung des Führungsgliedes ist, die, in einem gegebenen Augenblick t, während das Führungsglied der Führung folgt, von dem Führungsprofil hervorgerufen wird,

k eine Federkonstante bedeutet,

x(t) eine Stellung des Führungsgliedes in einem gegebenen Augenblick t ist,

und

f eine konstante Kraft darstellt, unter der das Führungsglied infolge des Lastkompensators (17) mit der Führung in Berührung gehalten werden soll,

wobei die zyklisch veränderbare Kompensationskraft P(t), die dem betreffenden Führungsprofil entspricht, im voraus festgelegt worden ist, so daß im Betrieb der Lastkompensator, der Hilfsmittel zur Reproduktion der vorgegebenen Kompensationskraft P(t) als Schwingung und zur Zuführung der Schwingung zu dem betätigenden Gerät enthält, die erforderliche Kompensationskraft synchron mit der Umdrehung der Führung (10) erzeugt.

2. Über eine Führung angetriebenes Gerät gemäß Anspruch 1, bei dem das betätigende Gerät des Lastkompensators (17) einen mit dem angetriebenen Teil (14) verbundenen Stößel (16) und einen rund um den Stößel angeordneten Hubelektromagneten (15) enthält, der durch eine Magnetkraft den Stößel hin- und herbewegen kann.

3. Drehbank mit einem über eine Führung angetriebenen Gerät gemäß Anspruch 1 oder 2, an deren Hauptachse die Führung befestigt ist, und bei der eine der Gestalt der Führung zugeordnete Bewegung von dem Führungsglied auf ein Schneidwerkzeug übertragen wird, das an dem angetriebener. Teil befestigt ist.

EP 0 065 993 B1

FIG.1

FIG.2

F IG. 3

# FIG.4

EP 0 065 993 B1

FIG.5

(a)

(b)

(c)

(d)

FIG.6

FIG. 7